# EUROPÄISCHE PATENTSCHRIFT

(11) **EP 3 670 342 B1**
(45) Veröffentlichungstag und Bekanntmachung des Hinweises auf die Patenterteilung: **01.12.2021**
(21) Anmeldenummer: 19215496.1
(22) Anmeldetag: 12.12.2019
(51) Int. Cl.: B64C 39/02, G08G 5/00, G08G 5/04

(54) **UNBEMANNTES LUFTFAHRZEUG MIT EINEM FLUGKONTROLLSYSTEM**
UNMANNED AIRCRAFT WITH A FLIGHT CONTROL SYSTEM
AÉRONEF SANS PILOTE DOTÉ D'UN SYSTÈME DE COMMANDE DE VOL

(30) Priorität: 18.12.2018 DE 102018132657
(43) Veröffentlichungstag der Anmeldung: 24.06.2020
(73) Patentinhaber: Airbus Defence and Space GmbH, 82024 Taufkirchen (DE)
(72) Erfinder: JUDAS, Michael, 82024 Taufkirchen (DE); FÖRSTER, Stefan, 82024 Taufkirchen (DE); TOWET, Frank, 82024 Taufkirchen (DE)
(74) Vertreter: LKGLOBAL Lorenz & Kopf PartG mbB Patentanwälte

(56) Entgegenhaltungen:
- EP-A1- 3 140 710
- EP-A1- 3 364 557
- EP-A2- 3 223 097
- WO-A1-2018/027902
- US-A1- 2012 221 175
- US-A1- 2014 249 693
- US-A1- 2017 103 659

## Beschreibung

### Gebiet der Erfindung

Die Erfindung betrifft ein unbemanntes Luftfahrzeug mit einem Flugkontrollsystem, einen Kontrollverbund, und ein Verfahren zum Steuern eines unbemannten Luftfahrzeugs mit einem Flugkontrollsystem.

### Technischer Hintergrund der Erfindung

Unbemannte Luftfahrzeuge (Drohnen) finden auch im zivilen Bereich immer mehr Verwendung. Hierdurch steigt auch das Risiko für andere Verkehrsteilnehmer im Luftraum, da mit den technischen Möglichkeiten, wie beispielsweise zunehmender maximaler Flughöhe oder Reichweite, auch die Wahrscheinlichkeit einer Kollision steigt. Zusätzlich kann mit unbemannten Luftfahrzeugen auch abgesperrtes Gebiet erreicht und auf möglicherweise ungewünschte Weise Informationen gesammelt werden. Die Identifikation des Besitzers oder Betreibers eines unbemannten Luftfahrzeugs stellt sich dabei in der Regel zusätzlich als schwierig heraus. Gleichzeitig bieten zivile unbemannte Luftfahrzeuge jedoch auch Funktionen, wie beispielsweise Videoübertragung, die von Seiten eines Dritten für dessen eigene Zwecke genutzt werden könnten. In einem solchen Fall stellt es sich für den Dritten aber regelmäßig als schwierig bis unmöglich dar, auf diese Funktionen zuzugreifen.

EP 3 140 710 A1 beschreibt Systeme und Verfahren für die Steuerung unbemannter Luftfahrzeuge. Es ist vorgesehen, dass die Steuerung eines unbemannten Luftfahrzeugs durch eine übergeordnete Einheit übernommen wird, wenn das unbemannte Luftfahrzeug in einen Bereich mit beschränkten Überflugrechten eindringt.

WO 2018/027902 A1 beschreibt ein redundantes Steuerverfahren für unbemannte Luftfahrzeuge, welche mittels Fernsteuerung und eigenen Steuermitteln gesteuert werden.

US 2012/221175 A1 beschreibt ein Luftfahrzeug mit einem Satellitenempfänger. Der Empfänger ist ausgestaltet, Steuerkommandonachrichten zu verarbeiten, wenn alternative Verbindungen nötig sind. Das Luftfahrzeug weist eine Avionik auf, welche Aktionen gemäß den empfangenen Kommandos ausführt.

EP 3 223 097 A2 beschreibt ein Flugmanagementsystem zum Steuern eines Flugs eines unbemannten Luftfahrzeugs.

### Zusammenfassung der Erfindung

Es kann als eine Aufgabe der Erfindung angesehen werden, die Kontrolle über ein unbemanntes Luftfahrzeug zu erweitern.

Es sind ein unbemanntes Luftfahrzeug mit einem Flugkontrollsystem, ein Kontrollverbund, und ein Verfahren zum Steuern eines unbemannten Luftfahrzeugs mit einem Flugkontrollsystem gemäß den Merkmalen der unabhängigen Patentansprüche angegeben. Weiterbildungen der Erfindung ergeben sich aus den Unteransprüchen und aus der folgenden Beschreibung.

Viele der im Folgenden in Hinblick auf das unbemannte Luftfahrzeug und den Kontrollverbund beschriebenen Merkmale lassen sich auch als Verfahrensschritte implementieren und umgekehrt.

Gemäß einem ersten Aspekt der Erfindung ist ein unbemanntes Luftfahrzeug mit einem Flugkontrollsystem, einer ersten Empfangseinheit zum Empfangen von ersten Signalen und eine zweiten Empfangseinheit zum Empfangen von zweiten Signalen angegeben. Das Flugkontrollsystem ist ausgeführt, die ersten Signale und die zweiten Signale in Steuerbefehle zum Steuern des Luftfahrzeugs umzuwandeln. Das Flugkontrollsystem ist weiterhin ausgeführt, von einem ersten Zustand in einen zweiten Zustand überführt zu werden. In dem ersten Zustand werden die ersten Signale zum Steuern des Luftfahrzeugs verwendet, und in dem zweiten Zustand werden die zweiten Signale zum Steuern des Luftfahrzeugs verwendet. Das Flugkontrollsystem ist ausgeführt, aus dem ersten Zustand in den zweiten Zustand überzugehen, wenn über die zweiten Signale ein entsprechendes Kommando empfangen wird. Das Flugkontrollsystem ist ausgeführt, aus dem zweiten Zustand in den ersten Zustand überführt zu werden, wenn über die zweiten Signale ein entsprechendes Kommando zum Freigeben aus dem zweiten Zustand empfangen wird.

Das unbemannte Luftfahrzeug kann ein zivil genutztes unbemanntes Luftfahrzeug sein, es kann aber auch ein militärisch genutztes, unbemanntes Luftfahrzeug sein. Das Flugkontrollsystem kann auch als Flugsteuersystem bezeichnet werden. Mit dem Flugkontrollsystem können die Komponenten des unbemannten Luftfahrzeugs gesteuert werden. Hierfür werden im Flugkontrollsystem empfangene Signale in Steuerbefehle zum Steuern des Luftfahrzeugs umgewandelt. Die Komponenten können Antriebskomponenten wie beispielsweise ein Motor (Verbrennungskraftmaschine, Elektromotor), damit gekoppelter Rotor, oder eine Mehrzahl von Rotoren, oder allgemein ein Triebwerk mit Düsen, oder vergleichbare Schub generierende Antriebe sein. Es können aber auch Lenkkomponenten wie beispielsweise Höhenleitwerk, Seitenleitwerk oder Querruder gesteuert werden. Weiterhin können über das Flugsteuersystem Peripheriegeräte wie beispielsweise eine Bildkamera mit oder ohne Mikrophon, eine Wärmebildkamera, oder vergleichbare die Umgebung erfassende Sensoren angesteuert werden. Die Peripheriegeräte können aber auch über eine Sendeeinheit Signale an die Umgebung abgeben, wie beispielsweise Alarmsignale in Form von akustischen Signalen. Die Alarmsignale können in Form von Blinken einer Leuchte gesendet werden. Über eine Sendeeinrichtung kann das Flugsteuersystem aber auch Daten an die Umgebung senden. Die Daten können Bilddaten sein, es können aber auch beliebige über Peripheriegeräte generierte Daten sein. Die Daten können auch eine Kennung des unbemannten Luftfahrzeugs umfassen. Die Kennung kann jegliche Formate umfassen. Die Kennung kann zur Identifikation des unbemannten Luftfahrzeugs und/oder dessen Halter eingesetzt werden. Die Kennung kann auch zur Registrierung des unbemannten Luftfahrzeugs eingesetzt werden. Das Flugkontrollsystem stellt somit die Schnittstelle zwischen den das unbemannte Luftfahrzeug erreichenden Signalen und den Steuerbefehlen zum Steuern des Luftfahrzeugs dar.

Um die ersten Signale zu empfangen weist das unbemannte Luftfahrzeug eine erste Empfangseinheit auf. Um die zweiten Signale zu empfangen weist das unbemannte Luftfahrzeug eine zweite Empfangseinheit auf. Die erste Empfangseinheit und die zweite Empfangseinheit können betreffend ihre Schnittstellen zum Anschließen an die luftfahrzeugseitigen Systeme, z.B. an das Flugkontrollsystem, baugleich sein. Es ist ebenso denkbar, aber nicht notwendig, dass die erste Empfangseinheit und die zweite Empfangseinheit betreffend die physischen Ausmaße baugleich sind. Die erste Empfangseinheit und die zweite Empfangseinheit können auch nicht baugleich sein. Die Empfangseinheiten dienen jeweils dem Empfangen von Signalen. Jede Empfangseinheit kann eine Antenne aufweisen. Die Empfangseinheit kann auch einen Modulator und/oder einen Demodulator aufweisen, welcher die über eine Luftschnittstelle empfangenen Signale in elektrische Signale umwandelt (Demodulator) oder welcher elektrische Signale für das Übertragen mittels einer Antenne aufbereitet (Modulator). Die ersten und/oder zweiten Signale können beispielsweise Mobilfunksignale wie 2G, 3G, 4G, 5G oder SATCom sein. Es sind aber auch andere Kommunikationsverbindungen wie beispielsweise WiFi möglich. Die ersten und/oder zweiten Signale können auch Bündelfunksignale wie TETRA, Tetrapol, DMR, APCO P25, MPT 1327, Smartnet oder Smartzone sein. Es sind aber auch andere Bündelfunksignale möglich. Die ersten und zweiten Signale können verschiedene Arten von Signalen sein. Die ersten und zweiten Signale können aber auch dieselbe Art Signal sein.

Zusammengefasst dient insbesondere die zweite Empfangseinheit dazu, mindestens folgende Funktionen auszuführen: Zugriff auf ein Netzwerk nur für einen autorisierten Personenkreis erlauben und eine Boden-Luft-Kommunikation bereitstellen. Eine Boden-Luft-Kommunikation bedeutet, dass ein Kommunikationsteilnehmer (beispielsweise die zweite Signalquelle) am Boden und der zweite Kommunikationsteilnehmer (die zweite Empfangseinheit in dem Luftfahrzeug) in der Luft ist.

Das Flugkontrollsystem ist ausgeführt, von einem ersten Zustand in einen zweiten Zustand überführt zu werden. Hierfür ist eine entsprechende Logik in das Flugkontrollsystem implementiert. Die Logik kann eine Funktion eines Prozessors oder Mikrocontrollers sein. Es ist ebenfalls denkbar, dass die Logik als Funktion eines programmierbaren Schaltgatter (FPGA) implementiert ist. In dem ersten Zustand werden erste Signale über das Flugkontrollsystem zum Steuern des Luftfahrzeugs verwendet. In dem zweiten Zustand werden zweite Signale über das Flugkontrollsystem zum Steuern des Luftfahrzeugs verwendet. In dem ersten Zustand kann ein erster Nutzer auf das unbemannte Luftfahrzeug zugreifen. Der erste Zustand kann auch als Normalzustand oder Privatflug bezeichnet werden. In dem Normalzustand kann beispielsweise der Halter oder Betreiber des unbemannten Luftfahrzeugs das unbemannte Luftfahrzeug über erste Signale steuern. Der zweite Zustand kann auch als Kontrollzustand bezeichnet werden. Hierbei kann ein zweiter Nutzer auf das unbemannte Luftfahrzeug zugreifen. Der erste Nutzer und der zweite Nutzer können identisch sein, sodass von demselben Nutzer von dem Normalzustand ausgehend auf den Kontrollzustand und umgekehrt gewechselt werden kann. In dem zweiten Zustand kann beispielsweise eine Behörde auf das Flugkontrollsystem zugreifen. Die Behörde kann beispielsweise die (Bundes-) Polizei, Küstenwache, Bergwacht, Technisches Hilfswerk, Grenzkontrolle, Feuerwehr, Krisenmanagement, (para-) militärische Organisationen oder die Verkehrsüberwachung sein.

Der Übergang aus dem ersten Zustand in den zweiten Zustand wird über ein zweites Signal in Form eines entsprechenden Kommandos ausgeführt. Dieser Übergang kann dem primären Nutzer (derjenige Nutzer, der das Luftfahrzeug über erste Signale steuert) über ein Signal mitgeteilt werden, wobei dieses Signal von dem Luftfahrzeug an den primären Nutzer übermittelt wird, nachdem der Zustandswechsel aus dem ersten Zustand in den zweiten Zustand erfolgte. Das entsprechende Kommando für den Zustandswechsel kann über die zweite Empfangseinheit in Form eines "on-board modem" empfangen werden. So kann beispielsweise eine Behörde auf ein fliegendes unbemanntes Luftfahrzeug zugreifen und über das Flugkontrollsystem das unbemannte Luftfahrzeug im zweiten Zustand steuern. Das Steuern kann ein Landen des unbemannten Luftfahrzeugs umfassen, insofern ein Weiterflug unterbunden werden soll. Dies bietet sich beispielsweise an, wenn ein unbemanntes Luftfahrzeug in den Luftraum eines Flughafens eindringt und startende oder landende Flugzeuge gefährden könnte. Das Steuern kann auch eine Umkehr zu einer Basis umfassen. Das Steuern kann aber auch ein Aktualisieren der Parameter des Flugkontrollsystems mit beispielsweise Missionsplänen umfassen. Weiterhin kann das Steuern ein Senden von Daten an eine definierte Empfängeradresse umfassen, wie beispielsweise eine Kennung zum Registrieren. Das Senden einer Kennung kann auch im ersten Zustand über ein automatisches Registrieren bei einer Empfängereinheit erfolgen. Das automatische Registrieren kann beispielsweise mit Inbetriebnahme des unbemannten Luftfahrzeugs erfolgen.

Die ersten Signale können über ein erstes Funknetz übertragen werden. Die zweiten Signale können über ein zweites Funknetz übertragen werden. Die beiden Funknetze können beispielsweise unterschiedliche Frequenzbereiche, Protokolle und/oder Signalcodierungen nutzen. Damit können das erste Signal und das zweite Signal über unterschiedliche Funknetze an das Luftfahrzeug übertragen werden. Somit kann eine gewisse Redundanz erreicht werden. Es ist aber ebenso denkbar, dass eines der Funknetze, bevorzugt das zweite Funknetz, ein Funknetz mit begrenztem oder gesteuertem Zugang ist, so dass nicht jedermann das zweite Funknetz nutzen kann. Somit kann erreicht werden, dass über das zweite Funknetz nur ein begrenzter Personenkreis überhaupt in der Lage ist, die Kontrolle über ein Luftfahrzeug zu übernehmen.

Gemäß der Erfindung ist das Flugkontrollsystem ausgeführt, aus dem zweiten Zustand in den ersten Zustand überführt zu werden, wenn über die zweiten Signale ein entsprechendes Kommando empfangen wird. So kann beispielsweise sichergestellt werden, dass eine Behörde die Kontrolle über das unbemannte Luftfahrzeug solange behält, bis die Behörde das unbemannte Luftfahrzeug wieder freigibt.

Allgemein kann eine auf das Luftfahrzeug zugreifende Behörde als Dritte Partei bezeichnet werden, welche sich Zugang zu mindestens ein paar Funktionen des Luftfahrzeugs verschafft, und zwar über die an die zweite Empfangseinheit gesendeten zweiten Signale.

Gemäß einer Ausführungsform der Erfindung ist das Flugkontrollsystem ausgeführt, in dem zweiten Zustand die ersten Signale und die zweiten Signale zum Steuern des Luftfahrzeugs zu verwenden. Somit kann beispielsweise eine Behörde und eine Zivilperson zur gleichen Zeit auf das Flugkontrollsystem zugreifen, um bevorzugt unterschiedliche Funktionen des Luftfahrzeugs zu steuern.

Gemäß einer Ausführungsform der Erfindung können die ersten Signale und die zweiten Signale über zwei voneinander getrennte Funknetze gesendet werden. Die Funknetze können beispielsweise ein TETRAPol-Funknetz (für die zweiten Signale), auf welches nur ein begrenzter Personenkreis, beispielsweise eine staatliche Behörde wie die Polizei, zugreifen kann, und ein zivil genutztes Funknetz (für die ersten Signale) sein.

Gemäß einer Ausführungsform der Erfindung weist das unbemannte Luftfahrzeug eine Manövriereinheit auf. Die Manövriereinheit kann eine Antriebskomponente und/oder eine Lenkkomponente sein. Das Flugkontrollsystem ist ausgeführt, in dem zweiten Zustand die ersten Signale oder die zweiten Signale zum Steuern der Manövriereinheit zu verwenden. Das unbemannte Luftfahrzeug kann somit über erste Signale oder zweite Signale bewegt werden. In einer Ausführungsform wird den zweiten Signalen Vorrang vor den ersten Signalen eingeräumt.

Gemäß einer Ausführungsform der Erfindung weist das unbemannte Luftfahrzeug eine Missionskomponente auf. Die Missionskomponente kann eines oder mehrere der oben genannten Peripheriegeräte sein. Das Flugkontrollsystem ist ausgeführt, in dem zweiten Zustand die ersten Signale oder die zweiten Signale zum Steuern der Missionskomponente zu verwenden. Die Missionskomponente des unbemannten Luftfahrzeugs können somit über erste Signale oder zweite Signale gesteuert werden. In einer Ausführungsform wird den zweiten Signalen Vorrang vor den ersten Signalen eingeräumt.

Wie bereits weiter oben beschrieben ist es möglich, dass über eine sog. geteilte Steuerung die ersten Signale zum Steuern der Manövrierkomponente und die zweiten Signale zum Steuern der Missionskomponente genutzt werden.

Gemäß einer Ausführungsform der Erfindung ist das Flugkontrollsystem ausgeführt, in dem zweiten Zustand die ersten Signale zum Steuern der Manövriereinheit und die zweiten Signale zum Steuern der Missionskomponente zu verwenden.

Einen möglichen Anwendungsfall stellt ein Zugriff auf die Missionskomponente über die Privatperson und ein Zugriff auf die Antriebs- und Lenkkomponenten über die Behörde dar, insofern die Behörde über die eigene Funkverbindung die Missionskomponente nicht erreichen kann. Es ist aber auch ein Anwendungsfall denkbar, in dem eine Privatperson die Antriebs- und Lenkkomponenten steuert und die Behörde auf die Missionskomponente zugreift. Dies kann beispielsweise der Fall sein, wenn eine Privatperson in der Nähe eines Verkehrsunfalls die Drohne steuert und aufgrund eines guten Überblicks über das Gelände das unbemannte Luftfahrzeug über das Areal manövriert und die Behörde eine in das unbemannte Luftfahrzeug integrierte Kamera steuert, um sich einen Überblick über das Geschehen zu verschaffen.

Gemäß einer Ausführungsform der Erfindung weist das unbemannte Luftfahrzeug eine Sendeeinheit auf. Die Sendeeinheit ist ausgeführt, einen Rückkanal zu einer Empfängereinheit aufzubauen, um Daten der Missionskomponente an die Empfängereinheit zu senden. Die Sendeeinheit kann in die erste Empfangseinheit integriert sein. Die Sendeeinheit kann in die zweite Empfangseinheit integriert sein. Es können auch jeweils eine Sendeeinheit in der ersten Empfangseinheit und in der zweiten Empfangseinheit vorgesehen sein. Die Sendeeinheit kann eine Antenne umfassen. Es ist möglich, dass die Sendeeinheit und die Empfangseinheit in einer einzelnen Baugruppe (Sende-/Empfangseinheit) mit einer einzelnen Antenne für die Verwendung zum Senden und Empfangen integriert sind. Die Daten können beispielsweise mittels einer Missionskomponente aufgenommene Bilddaten sein.

Gemäß einer Ausführungsform der Erfindung ist in den zweiten Signalen eine Empfängeradresse der Empfängereinheit enthalten. Mittels der Empfängeradresse der Empfängereinheit kann ein Rückkanal aufgebaut werden und über es können Daten über diesen Rückkanal gesendet werden. Es kann eine Empfängeradresse für eine beliebige Empfängereinheit angegeben werden, solange das Luftfahrzeug die Empfängereinheit mittelbar oder unmittelbar über eine Datenverbindung erreichen kann. Diese Datenverbindung kann insbesondere über die ersten Signale sowie ein sich daran anschließendes Datennetz aufgebaut werden.

Es ist ein Verbund zum Steuern eines unbemannten Luftfahrzeugs angegeben. Der Verbund weist ein unbemanntes Luftfahrzeug wie hier beschrieben, eine erste Signalquelle und eine zweite Signalquelle auf. Die erste Signalquelle ist ausgeführt, die ersten Signale zu senden, wobei die zweite Signalquelle ausgeführt ist, die zweiten Signale zu senden. Die erste Signalquelle kann beispielsweise von einer Privatperson gesteuert werden. Die zweite Signalquelle kann beispielsweise von einer Behörde gesteuert werden. Die ersten Signale können an das unbemannte Luftfahrzeug über eine erste Funkstation gesendet werden. Die zweiten Signale können an das unbemannte Luftfahrzeug über eine zweite Funkstation gesendet werden. In anderen Worten werden die ersten und zweiten Signale zum Steuern einer Funktion des Luftfahrzeugs über ein Datennetz oder eine bereitstehende Infrastruktur (Funkstation) mittelbar an das Luftfahrzeug gesendet. Es ist aber auch möglich, dass die ersten und zweiten Signale zum Steuern einer Funktion des Luftfahrzeugs direkt von der ersten Signalquelle an das Luftfahrzeug übertragen werden.

Es ist ein Verfahren zum Steuern eines unbemannten Luftfahrzeugs vorgesehen. Das Verfahren umfasst nachfolgende Schritte: Steuern des unbemannten Luftfahrzeugs über ein Flugkontrollsystem mittels erster Signale in einem ersten Zustand des Flugkontrollsystems; Übergehen aus dem ersten Zustand in einen zweiten Zustand, wenn ein entsprechendes Kommando (dieses kann als Zustandsübergangskommando bezeichnet werden) über zweite Signale empfangen wird; Steuern des unbemannten Luftfahrzeugs über das Flugkontrollsystem mittels zweiter Signale in dem zweiten Zustand des Flugkontrollsystems. Einem primären Nutzer kann die Übernahme der Steuerung durch einen sekundären Nutzer mitgeteilt werden, indem entsprechende Signale an eine Bedienvorrichtung des primären Nutzers übertragen werden. Die Übernahme der Steuerung durch den sekundären Nutzer entspricht dem Zustandswechsel aus dem ersten Zustand in den zweiten Zustand.

Gemäß der Erfindung ist für das Verfahren noch weiter vorgesehen, dass das unbemannte Luftfahrzeug aus dem zweiten Zustand freigegeben wird. Hierbei kommt es zu einem Übergehen aus dem zweiten Zustand in den ersten Zustand, wenn ein entsprechendes Kommando über die zweiten Signale empfangen wird.

Es können sämtliche oben genannten Funktionen des Luftfahrzeugs und des Verbunds als Verfahrensschritte implementiert werden.

### Kurze Beschreibung der Figuren

Im Folgenden werden mit Verweis auf die Figuren Ausführungsbeispiele der Erfindung beschrieben. Darin zeigen:
Fig. 1 ein unbemanntes Luftfahrzeug gemäß einem Ausführungsbeispiel der Erfindung.
Fig. 2 einen Verbund gemäß einem weiteren Ausführungsbeispiel der Erfindung.
Fig. 3 einen Verbund gemäß einem weiteren Ausführungsbeispiel der Erfindung.
Fig. 4 einen Verbund gemäß einem weiteren Ausführungsbeispiel der Erfindung.
Fig. 5 einen Verbund gemäß einem weiteren Ausführungsbeispiel der Erfindung.
Fig. 6 ein Verfahren zum Steuern eines unbemannten Luftfahrzeugs gemäß einem Ausführungsbeispiel der Erfindung.

### Detaillierte Beschreibung von Ausführungsbeispielen

Die Darstellungen in den Figuren sind schematisch und nicht maßstabsgetreu.

Werden in der folgenden Figurenbeschreibung gleiche Bezugsziffern verwendet, so betreffen diese gleiche oder ähnliche Elemente.

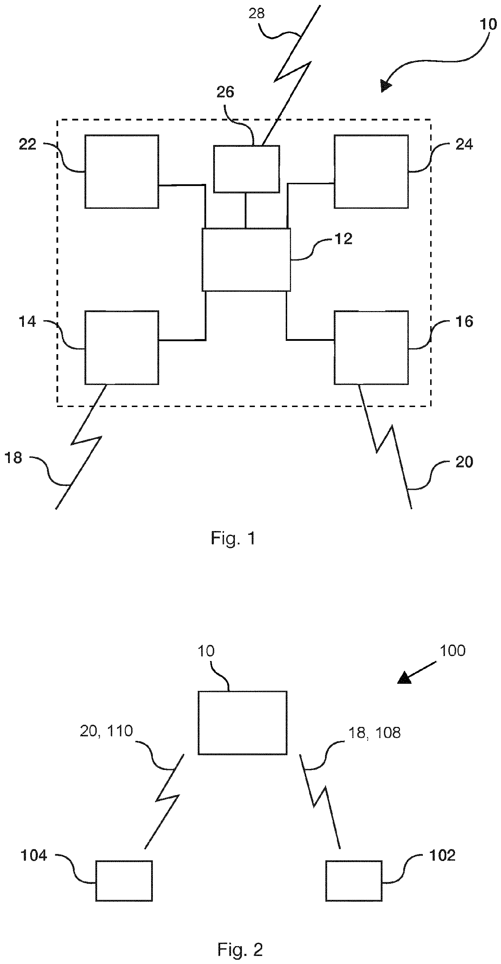

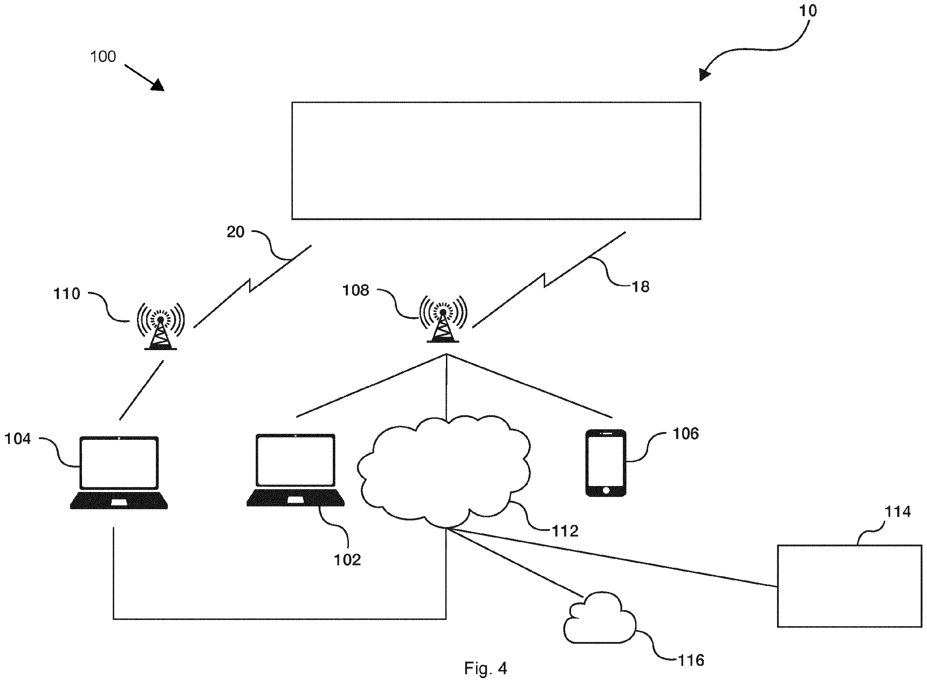

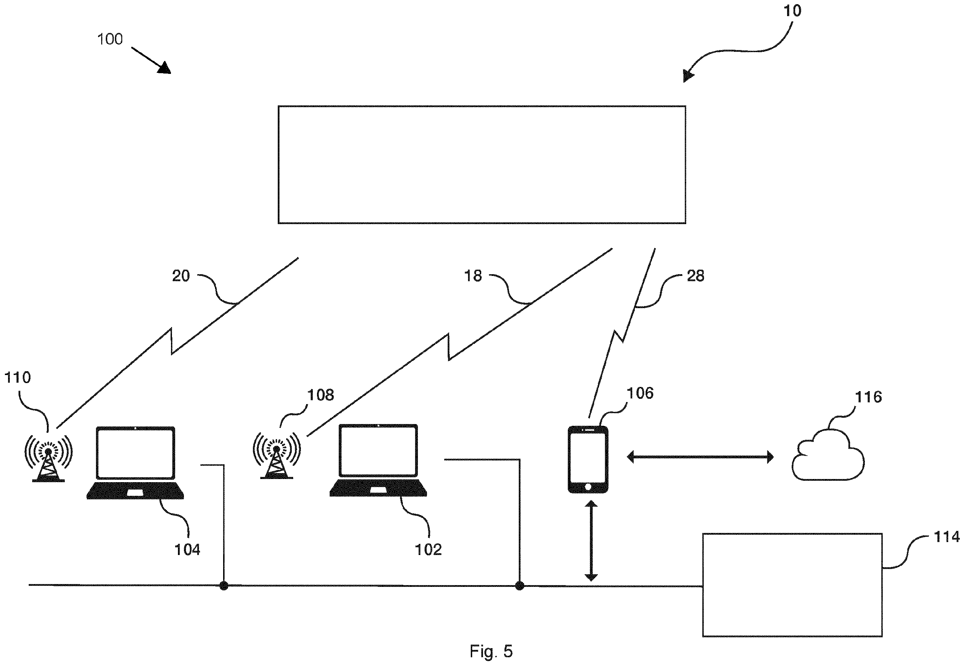

Fig. 1 zeigt eine schematische Darstellung eines unbemannten Luftfahrzeugs 10. Das unbemannte Luftfahrzeug 10 weist ein Flugkontrollsystem 12, eine erste Empfangseinheit 14 zum Empfangen von ersten Signalen 18 und eine zweite Empfangseinheit 16 zum Empfangen von zweiten Signalen 20 auf. Weiterhin weist das unbemannte Luftfahrzeug 10 eine Manövriereinheit 22 und eine Missionskomponente 24 auf, wobei das Flugkontrollsystem 12 ausgeführt ist, in dem zweiten Zustand die ersten Signale 18 oder die zweiten Signale 20 zum Steuern der Manövriereinheit 22 und der Missionskomponente 24 zu verwenden. Weiterhin weist das unbemannte Luftfahrzeug 10 eine Sendeeinheit 26 auf, wobei die Sendeeinheit 26 ausgeführt ist, einen Rückkanal 28 zu einer Empfängereinheit (in Fig. 1 nicht gezeigt, siehe Fig. 4 und 5) aufzubauen, um Daten der Missionskomponente 22 an die Empfängereinheit zu senden. Das Flugkontrollsystem 12 ist mit der ersten Empfangseinheit 14, der zweiten Empfangseinheit 16, der Manövriereinheit 22, der Missionskomponente 24 und der Sendeeinheit 26 verbunden. Weiterhin ist das Flugkontrollsystem 12 ausgeführt, die ersten Signale 18 und die zweiten Signale 20 in Steuerbefehle zum Steuern des Luftfahrzeugs umzuwandeln. Das Steuern umfasst einen Datenaustausch zwischen dem Flugkontrollsystem und den damit verbundenen Komponenten. Weiterhin ist das Flugkontrollsystem 12 ausgeführt aus einem ersten Zustand in einen zweiten Zustand überführt zu werden, wenn über die zweiten Signale 20 ein entsprechendes Kommando empfangen wird. In dem ersten Zustand ist das Flugkontrollsystem ausgeführt, die ersten Signale 18 zum Steuern des Luftfahrzeugs zu verwenden, und in dem zweiten Zustand die zweiten Signale 20 zum Steuern des Luftfahrzeugs zu verwenden. Weiterhin ist das Luftfahrzeug 10 ausgeführt, in dem zweiten Zustand die ersten Signale 18 oder die zweiten Signale 20 zum Steuern der Manövriereinheit 22 und/oder der Missionskomponente 24 zu verwenden.

Auch wenn im Zusammenhang mit Fig. 1 die Komponenten 14 und 16 als Empfangseinheiten bezeichnet werden, können die entsprechenden Baugruppen zusätzlich Funktionen zum Senden von Daten über denselben jeweiligen Kanal enthalten. Das bedeutet, dass die Komponente 14 eine kombinierte Sende-/Empfangseinheit sein kann, welche über eine Datenverbindung, über welche die ersten Signale 18 übertragen werden, eine bidirektionale Datenübertragung ermöglicht. Die Komponente 16 kann funktional ähnlich aufgebaut sein. Die bidirektionale Datenübertragung der Komponenten 14 und 16 kann unabhängig von dem Rückkanal 28 sein. Der Rückkanal 28 kann sich nämlich auf eine andere Empfängereinheit beziehen, welche getrennt ist von der ersten Signalquelle 102 und der zweiten Signalquelle 104. Insbesondere erhalten die Signalquellen 102, 104 die Daten, welche über die besagten bidirektionalen Datenverbindungen ausgehend von dem Luftfahrzeug gesendet werden.

Fig. 2 zeigt eine schematische Darstellung eines Verbunds 100. Der Verbund 100 weist ein unbemanntes Luftfahrzeug, eine erste Signalquelle 102 und eine zweite Signalquelle 104 auf. Die erste Signalquelle 102 ist mit einem ersten Funknetz 108 und die zweite Signalquelle 104 mit einem zweiten Funknetz 110 verbunden. Über das erste Funknetz 108 können erste Signale 18, und über das zweite Funknetz 110 können zweite Signale 20 an das unbemannte Luftfahrzeug 10 gesendet werden.

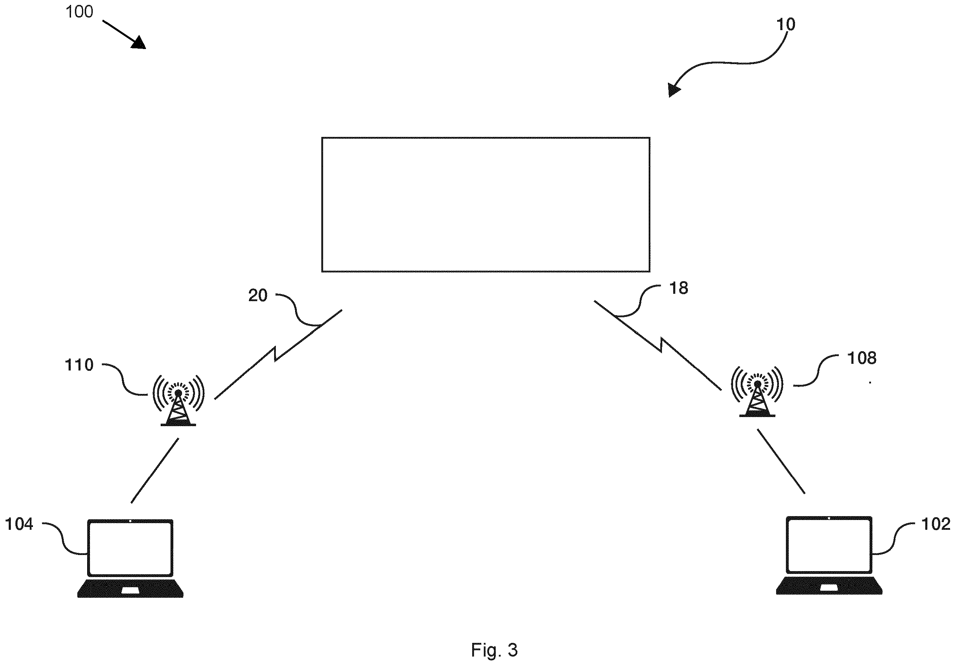

Fig. 3 zeigt einen Verbund. Der Verbund 100 weist ein unbemanntes Luftfahrzeug 10, eine erste Signalquelle 102 und eine zweite Signalquelle 104 auf. Die erste Signalquelle 102 ist mit einer ersten Funkstation 108 und die zweite Signalquelle 104 ist mit einer zweiten Funkstation 110 verbunden. Die erste Funkstation 108 kann mit einem ersten Funknetz verbunden sein. Das erste Funknetz kann ein TETRA Funknetz sein. Die zweite Funkstation 110 kann mit einem zweiten Funknetz verbunden sein. Das zweite Funknetz kann ein UMTS, 3G, 4G, WiFi oder eine Direktverbindung sein.

Fig. 4 zeigt eine weitere Ausführungsform eines Verbunds. Der Verbund 100 weist ein unbemanntes Luftfahrzeug, eine erste Signalquelle 102 und eine zweite Signalquelle 104 auf, wobei die erste Signalquelle 102 mit einer ersten Funkstation 108 und die zweite Signalquelle mit einer zweiten Funkstation 110 verbunden ist. Weiterhin ist die zweite Funkstation mit einem ersten Datennetz 112 und einer Empfängereinheit 106 verbunden. Die zweite Signalquelle 104 kann über das erste Datennetz 112 Daten von dem unbemannten Luftfahrzeug 10 empfangen. Über das erste Datennetz 112 können Daten an ein zweites Datennetz 116 oder an eine Kontrollstation 114 gesendet werden. Die Kontrollstation 114 kann ausgeführt sein, über eine jeweilige Registrierung eine Vielzahl von unbemannten Luftfahrzeugen 10 zu überwachen und gegebenenfalls auf diese einwirken zu können. Weiterhin können über das erste Datennetz 112 Steuerbefehle der zweiten Signalquelle 104, der Empfängereinheit oder der Kontrollstation 114 an die zweite Funkstation 110 weitergeleitet werden.

Fig. 5 zeigt eine weitere Ausführungsform des Verbunds, welcher schon mit Bezug zu Fig. 3 und Fig. 4 beschrieben wurde. Der Verbund 100 weist ein unbemanntes Luftfahrzeug, eine erste Signalquelle 102 und eine zweite Signalquelle 104 auf, wobei die erste Signalquelle 102 mit einem ersten Funknetz 108 und die zweite Signalquelle mit einem zweiten Funknetz 110 verbunden ist. Über einen Rückkanal 28 ist das unbemannte Luftfahrzeug 10 mit einer Empfängereinheit verbunden. Die Adresse der Empfängereinheit kann von der zweiten Signalquelle 104 über das zweite Funknetz 110 an das Luftfahrzeug 10 übertragen werden.

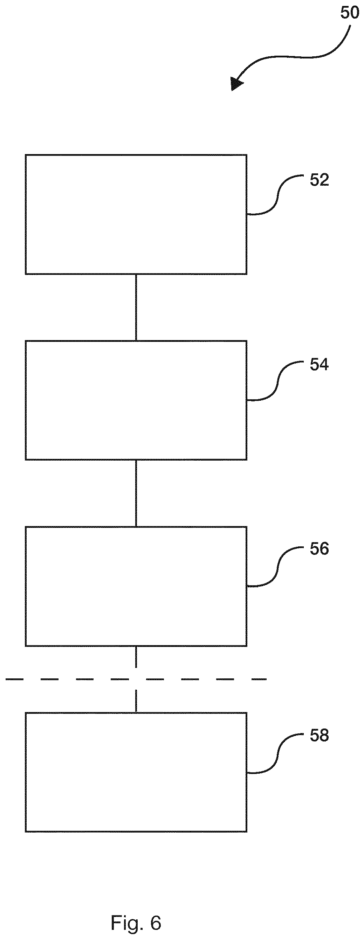

Fig. 6 zeigt eine schematische Darstellung eines Verfahrens 50 zum Steuern eines unbemannten Luftfahrzeugs 10. Der erste Schritt umfasst ein Steuern 52 des unbemannten Luftfahrzeugs 10 über ein Flugkontrollsystem 12 mittels erster Signale 18 in einem ersten Zustand des Flugkontrollsystems 12. Soll nun die Kontrolle über das unbemannte Luftfahrzeug 10 an eine zweite Signalquelle 104 übergeben werden (bzw. soll die Steuerung des Luftfahrzeugs 10 von der zweiten Signalquelle übernommen werden), kommt es zu einem Übergehen 54 aus dem ersten Zustand in einen zweiten Zustand, wenn das Flugkontrollsystem 12 ein entsprechendes Kommando über zweite Signale 20 empfängt. Der nächste Schritt umfasst somit ein Steuern 56 des unbemannten Luftfahrzeugs 10 über das Flugkontrollsystem 12 mittels zweiter Signale 18 in dem zweiten Zustand des Flugkontrollsystems 12. In diesem Zustand können über einen Rückkanal 28 Informationen wie beispielsweise Lage, Position oder Status gesendet werden. Die Informationen können über den Rückkanal 28 an eine Empfängereinheit gesendet werden. Alternativ oder zusätzlich können dieselben Informationen über einen weiteren Kanal an die erste Signalquelle 102 und/oder an die zweite Signalquelle 104 gesendet werden.

Als zusätzlichen optionalen Schritt (getrennt durch eine horizontale gestrichelte Linie) umfasst das Verfahren 50 noch ein Übergehen 58 aus dem zweiten Zustand in den ersten Zustand, wenn ein entsprechendes Kommando über die zweiten Signale 20 empfangen wird. Somit kann die Kontrolle des unbemannten Luftfahrzeugs 10 wieder an die erste Signalquelle 102 übergeben werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Liste der Bezugszeichen

- 10: Unbemanntes Luftfahrzeug
- 12: Flugkontrollsystem
- 14: Erste Empfangseinheit
- 16: Zweite Empfangseinheit
- 18: Erste Signale
- 20: Zweite Signale
- 22: Manövriereinheit
- 24: Missionskomponente
- 26: Sendeeinheit
- 28: Rückkanal
- 100: Verbund
- 102: Erste Signalquelle
- 104: Zweite Signalquelle
- 106: Empfängereinheit
- 108: Erste Funkstation
- 110: Zweite Funkstation
- 112: Erstes Datennetz
- 114: Kontrollstation
- 116: Zweites Datennetz

## Patentansprüche

1. Ein unbemanntes Luftfahrzeug (10), aufweisend:
ein Flugkontrollsystem (12);
eine erste Empfangseinheit (14) zum Empfangen von ersten Signalen (18); und
eine zweite Empfangseinheit (16) zum Empfangen von zweiten Signalen (20);
wobei das Flugkontrollsystem (12) ausgeführt ist, die ersten Signale (18) und die zweiten Signale (20) in Steuerbefehle zum Steuern des Luftfahrzeugs umzuwandeln;
wobei das Flugkontrollsystem (12) ausgeführt ist, von einem ersten Zustand in einen zweiten Zustand überführt zu werden;
wobei in dem ersten Zustand die ersten Signale (18) zum Steuern des Luftfahrzeugs verwendet werden und in dem zweiten Zustand die zweiten Signale (20) zum Steuern des Luftfahrzeugs verwendet werden;
wobei das Flugkontrollsystem (12) ausgeführt ist, aus dem ersten Zustand in den zweiten Zustand überzugehen, wenn über die zweiten Signale (20) ein entsprechendes Kommando empfangen wird;
**dadurch gekennzeichnet, dass**
das Flugkontrollsystem (12) ausgeführt ist, aus dem zweiten Zustand in den ersten Zustand überführt zu werden, wenn über die zweiten Signale (20) ein entsprechendes Kommando zum Freigeben aus dem zweiten Zustand empfangen wird.

2. Das unbemannte Luftfahrzeug (10) nach Anspruch 1,
wobei das Flugkontrollsystem (12) ausgeführt ist, in dem zweiten Zustand die ersten Signale (18) und die zweiten Signale (20) zum Steuern des Luftfahrzeugs zu verwenden.

3. Das unbemannte Luftfahrzeug nach einem der vorhergehenden Ansprüche,
wobei die ersten Signale (18) und die zweiten Signale (20) über zwei voneinander getrennte Funknetze gesendet werden.

4. Das unbemannte Luftfahrzeug (10) nach einem der vorhergehenden Ansprüche, weiterhin aufweisend:
eine Manövriereinheit (22);
wobei das Flugkontrollsystem (12) ausgeführt ist, in dem zweiten Zustand die ersten Signale (18) oder die zweiten Signale (20) zum Steuern der Manövriereinheit (24) zu verwenden.

5. Das unbemannte Luftfahrzeug (10) nach Anspruch 4, weiterhin aufweisend:
eine Missionskomponente (24);
wobei das Flugkontrollsystem (12) ausgeführt ist, in dem zweiten Zustand die ersten Signale (18) oder die zweiten Signale (20) zum Steuern der Missionskomponente (22) zu verwenden.

6. Das unbemannte Luftfahrzeug nach Anspruch 5,
wobei das Flugkontrollsystem (12) ausgeführt ist, in dem zweiten Zustand die ersten Signale (18) zum Steuern der Missionskomponente (24) und die zweiten Signale (20) zum Steuern der Manövriereinheit (22) zu verwenden.

7. Das unbemannte Luftfahrzeug nach Anspruch 5,
wobei das Flugkontrollsystem (12) ausgeführt ist, in dem zweiten Zustand die ersten Signale (18) zum Steuern der Manövriereinheit (22) und die zweiten Signale (20) zum Steuern der Missionskomponente (24) zu verwenden.

8. Das unbemannte Luftfahrzeug nach einem der Ansprüche 5 bis 7, weiterhin aufweisend:
eine Sendeeinheit (26);
wobei die Sendeeinheit (26) ausgeführt ist, einen Rückkanal (28) zu einer Empfängereinheit (106) aufzubauen, um Daten der Missionskomponente (24) an die Empfängereinheit (106) zu senden.

9. Das unbemannte Luftfahrzeug nach Anspruch 8,
wobei in den zweiten Signalen (20) eine Empfängeradresse der Empfängereinheit (106) enthalten ist.

10. Ein Verbund (100) zum Steuern eines unbemannten Luftfahrzeugs, aufweisend:
ein unbemanntes Luftfahrzeug (10) nach Anspruch 1 bis 9;
eine erste Signal quelle (102);
eine zweite Signal quelle (104);
wobei die erste Signalquelle ausgeführt ist, die ersten Signale (18) zu senden,
wobei die zweite Signalquelle ausgeführt ist, die zweiten Signale (20) zu senden.

11. Ein Verfahren (50) zum Steuern eines unbemannten Luftfahrzeugs (10), wobei das Verfahren folgende Schritte umfasst:
Steuern (52) des unbemannten Luftfahrzeugs (10) über ein Flugkontrollsystem (12) mittels erster Signale (18) in einem ersten Zustand des Flugkontrollsystems (12);
Übergehen (54) aus dem ersten Zustand in einen zweiten Zustand, wenn ein entsprechendes Kommando über zweite Signale (20) empfangen wird;
Steuern (56) des unbemannten Luftfahrzeugs (10) über das Flugkontrollsystem (12) mittels zweiter Signale (18) in dem zweiten Zustand des Flugkontrollsystems (12);
**gekennzeichnet durch** die weiteren Schritte:
Freigeben des unbemannten Luftfahrzeugs aus dem zweiten Zustand;
Übergehen (58) aus dem zweiten Zustand in den ersten Zustand, wenn ein entsprechendes Kommando über die zweiten Signale empfangen wird.

## Claims

1. Unmanned aircraft (10) having:
a flight control system (12);
a first receiving unit (14) for receiving first signals (18); and
a second receiving unit (16) for receiving second signals (20);
wherein the flight control system (12) is designed to convert the first signals (18) and the second signals (20) into control commands for controlling the aircraft;
wherein the flight control system (12) is designed to be changed from a first state to a second state;
wherein the first signals (18) are used to control the aircraft in the first state and the second signals (20) are used to control the aircraft in the second state;
wherein the flight control system (12) is designed to change from the first state to the second state if a corresponding command is received via the second signals (20) ;
**characterized in that**
the flight control system (12) is designed to be changed from the second state to the first state if a corresponding command for release from the second state is received via the second signals (20).

2. Unmanned aircraft (10) according to Claim 1,
wherein the flight control system (12) is designed to use the first signals (18) and the second signals (20) to control the aircraft in the second state.

3. Unmanned aircraft according to one of the preceding claims,
wherein the first signals (18) and the second signals (20) are transmitted via two radio networks which are separate from one another.

4. Unmanned aircraft (10) according to one of the preceding claims, also having:
a manoeuvring unit (22);
wherein the flight control system (12) is designed to use the first signals (18) or the second signals (20) to control the manoeuvring unit (24) in the second state.

5. Unmanned aircraft (10) according to Claim 4, also having:
a mission component (24);
wherein the flight control system (12) is designed to use the first signals (18) or the second signals (20) to control the mission component (22) in the second state.

6. Unmanned aircraft according to Claim 5,
wherein the flight control system (12) is designed to use the first signals (18) to control the mission component (24) and the second signals (20) to control the manoeuvring unit (22) in the second state.

7. Unmanned aircraft according to Claim 5,
wherein the flight control system (12) is designed to use the first signals (18) to control the manoeuvring unit (22) and the second signals (20) to control the mission component (24) in the second state.

8. Unmanned aircraft according to one of Claims 5 to 7, also having:
a transmitting unit (26);
wherein the transmitting unit (26) is configured to set up a return channel (28) to a receiver unit (106) in order to transmit data from the mission component (24) to the receiver unit (106).

9. Unmanned aircraft according to Claim 8,
wherein a receiver address of the receiver unit (106) is included in the second signals (20).

10. Assembly (100) for controlling an unmanned aircraft, having:
an unmanned aircraft (10) according to Claims 1 to 9;
a first signal source (102);
a second signal source (104);
wherein the first signal source is designed to transmit the first signals (18),
wherein the second signal source is designed to transmit the second signals (20).

11. Method (50) for controlling an unmanned aircraft (10), wherein the method comprises the following steps of:
controlling (52) the unmanned aircraft (10) via a flight control system (12) by means of first signals (18) in a first state of the flight control system (12);
changing (54) from the first state to a second state if a corresponding command is received via second signals (20) ;
controlling (56) the unmanned aircraft (10) via the flight control system (12) by means of second signals (18) in the second state of the flight control system (12) ;
**characterized by** the further steps of:
releasing the unmanned aircraft from the second state;
changing (58) from the second state to the first state if a corresponding command is received via the second signals.

## Revendications

1. Aéronef sans pilote (10), présentant :
un système de gestion de vol (12) ;
une première unité de réception (14) pour recevoir des premiers signaux (18) ; et
une deuxième unité de réception (16) pour recevoir des deuxièmes signaux (20) ;
le système de gestion de vol (12) étant réalisé pour convertir les premiers signaux (18) et les deuxièmes signaux (20) en ordres de commande pour commander l'aéronef ;
le système de gestion de vol (12) étant réalisé pour être amené à passer d'un premier état à un deuxième état ;
dans lequel dans le premier état, les premiers signaux (18) sont utilisés pour commander l'aéronef, et dans le deuxième état, les deuxièmes signaux (20) sont utilisés pour commander l'aéronef ;
le système de gestion de vol (12) étant réalisé pour passer du premier état au deuxième état quand une instruction correspondante est reçue par l'intermédiaire des deuxièmes signaux (20) ;
**caractérisé en ce que** le système de gestion de vol (12) est réalisé pour être amené à passer du deuxième état au premier état quand une instruction correspondante est reçue par l'intermédiaire des deuxièmes signaux (20) pour une libération du deuxième état.

2. Aéronef sans pilote (10) selon la revendication 1, dans lequel le système de gestion de vol (12) est réalisé pour utiliser dans le deuxième état les premiers signaux (18) et les deuxièmes signaux (20) pour commander l'aéronef.

3. Aéronef sans pilote selon l'une quelconque des revendications précédentes, dans lequel les premiers signaux (18) et les deuxièmes signaux (20) sont envoyés par deux réseaux radio séparés l'un de l'autre.

4. Aéronef sans pilote (10) selon l'une quelconque des revendications précédentes, présentant en outre :
une unité de manœuvre (22) ;
le système de gestion de vol (12) étant réalisé pour utiliser dans le deuxième état les premiers signaux (18) ou les deuxièmes signaux (20) pour commander l'unité de manœuvre (24).

5. Aéronef sans pilote (10) selon la revendication 4, présentant en outre :
un élément de mission (24) ;
le système de gestion de vol (12) étant réalisé pour utiliser dans le deuxième état les premiers signaux (18) ou les deuxièmes signaux (20) pour commander l'élément de mission (22).

6. Aéronef sans pilote selon la revendication 5, dans lequel le système de gestion de vol (12) est réalisé pour utiliser dans le deuxième état les premiers signaux (18) pour commander l'élément de mission (24) et les deuxièmes signaux (20) pour commander l'unité de manœuvre (22).

7. Aéronef sans pilote selon la revendication 5, dans lequel le système de gestion de vol (12) est réalisé pour utiliser dans le deuxième état les premiers signaux (18) pour commander l'unité de manœuvre (22) et les deuxièmes signaux (20) pour commander l'élément de mission (24).

8. Aéronef sans pilote selon l'une quelconque des revendications 5 à 7, présentant en outre :
une unité d'émission (26) ;
l'unité d'émission (26) étant réalisée pour établir un canal de retour (28) vers une unité de réception (106) afin d'envoyer des données de l'élément de mission (24) à l'unité de réception (106).

9. Aéronef sans pilote selon la revendication 8, dans lequel les deuxièmes signaux (20) contiennent une adresse de réception de l'unité de réception (106).

10. Ensemble (100) permettant de commander un aéronef sans pilote, présentant :
un aéronef sans pilote (10) selon les revendications 1 à 9 ;
une première source de signal (102) ;
une deuxième source de signal (104) ;
la première source de signal étant réalisée pour envoyer les premiers signaux (18),
la deuxième source de signal étant réalisée pour envoyer les deuxièmes signaux (20).

11. Procédé (50) permettant de commander un aéronef sans pilote (10), le procédé comprenant les étapes suivantes consistant à :
commander (52) l'aéronef sans pilote (10) par l'intermédiaire d'un système de gestion de vol (12) au moyen de premiers signaux (18) dans un premier état du système de gestion de vol (12) ;
passer (54) du premier état à un deuxième état quand une instruction correspondante est reçue par l'intermédiaire de deuxièmes signaux (20) ;
commander (56) l'aéronef sans pilote (10) par l'intermédiaire du système de gestion de vol (12) au moyen de deuxièmes signaux (18) dans le deuxième état du système de gestion de vols (12) ;
**caractérisé par** les étapes supplémentaires consistant à :
libérer l'aéronef sans pilote du deuxième état ;
passer (58) du deuxième état au premier état quand une instruction correspondante est reçue par l'intermédiaire des deuxièmes signaux.
